# EUROPÄISCHE PATENTSCHRIFT

(11) **EP 4 281 281 B1**
(45) Veröffentlichungstag und Bekanntmachung des Hinweises auf die Patenterteilung: **15.01.2025**
(21) Anmeldenummer: 22701620.1
(22) Anmeldetag: 25.01.2022
(51) Int. Cl.: B29C 73/16, B60C 23/10, B60C 23/00

(54) **REIFENREPARATURSET UND VERFAHREN ZUM AUFBLASEN UND/ODER ABDICHTEN EINES REIFENS**
TYRE REPAIR KIT AND METHOD FOR INFLATING AND/OR SEALING A TYRE
KIT DE RÉPARATION DE PNEUMATIQUE ET MÉTHODE DE GONFLAGE ET/OU DE SCELLAGE D'UN PNEUMATIQUE

(30) Priorität: 25.01.2021 DE 102021101463
(43) Veröffentlichungstag der Anmeldung: 29.11.2023
(73) Patentinhaber: KT Projektentwicklungs-GmbH, 74199 Untergruppenbach (DE)
(72) Erfinder: TSIBERIDIS, Konstantin, 74199 Untergruppenbach (DE); SPINDLER, Martin, 88634 Herdwangen-Schoenach (DE)
(74) Vertreter: Beyer, Andreas
(86) Internationale Anmeldenummer: PCT/EP2022/051553
(87) Internationale Veröffentlichungsnummer: WO 2022/157372

(56) Entgegenhaltungen:
- EP-A1- 1 914 062
- US-A1- 2019 023 091

## Beschreibung

Die Erfindung betrifft allgemein Verfahren und Vorrichtungen zum Aufblasen und/oder Abdichten eines Fahrzeugreifens und insbesondere zum Ausbringen eines Mittels zum Abdichten eines aufblasbaren Gegenstands, insbesondere eines Reifens, aus einem Behälter.

Im Einzelnen betrifft die Erfindung insbesondere ein Reifenreparaturset zum bedarfsweisen Aufpumpen und/oder Abdichten eines auf einer Felge eines Fahrzeugrads montierten Reifens. Ein derartiges Reifenreparaturset kann als sogenanntes Pannenset verwendet werden, beispielsweise als Ersatz für ein Reserverad in einem Kraftfahrzeug.

Die Erfindung betrifft ferner ein Verfahren zum Aufblasen und/oder Abdichten eines Fahrzeugreifens und insbesondere zum Ausbringen eines Dichtmittels zum Abdichten eines auf einer Felge eines Fahrzeugrads montierten Reifens.

Derartige Vorrichtungen in Gestalt von Reifenreparatursets oder Pannensets und Verfahren sind in vielfältiger Form und Ausführung bekannt. Wenn beispielsweise ein Reifen eines Fahrzeugs undicht wird und Luft verliert, gibt es entweder die Möglichkeit, den Reifen zu wechseln, oder es wird ein Pannenset/Reifenreparaturset verwendet. Ein Reifenwechsel ist anstrengend und schwer und vor allem nimmt ein Reifen im Kofferraum viel Platz ein. Dazu kommt noch der zusätzliche Treibstoffverbrauch durch das zusätzliche Gewicht des Reifens samt Felge.

Die einfachere und schnellere Variante sind Pannensets bzw. Reifenreparatursets. Pannensets bzw. Reifenreparatursets der bekannten Art können häufig entweder nur zum Aufpumpen eines Reifens oder zum Abdichten und anschließenden Aufpumpen eines Reifens verwendet werden. Je nachdem, ob der Reifen nur aufgepumpt oder sowohl abgedichtet als auch aufgepumpt werden soll, wird von einem Benutzer entweder ein Schlauch mit einem Kompressor oder ein Dichtmittelbehälter mittels eines Schlauchs mit beispielsweise einem Kompressor und mit dem Reifen verbunden.

Beispielsweise wird in der Druckschrift DE 20 2005 021 981 U1 ein Ausrüstsatz zum Aufblasen und Reparieren aufblasbarer Gegenstände, insbesondere Reifen, beschrieben, wobei der Ausrüstsatz eine Kompressoranordnung, einen Behälter mit einer Versiegelungsflüssigkeit und eine Verbindungseinrichtung zum Verbinden des Behälters mit der Kompressoranordnung und mit einem aufblasbaren Gegenstand oder Erzeugnis zum Reparieren und Aufblasen aufweist. Der Ausrüstsatz weist des Weiteren ein äußeres Gehäuse auf, welches die Kompressoranordnung aufnimmt und welches einen Sitz für den Behälter der Versiegelungsflüssigkeit definiert. Der Behälter ist entfernbar im Sitz aufgenommen. Durch das Vorsehen der Verbindungseinrichtung zum stabilen Verbinden des Behälters mit der Kompressoranordnung ergibt sich, dass, wenn der Behälter im Sitz aufgenommen ist, der Behälter funktional mit der Kompressoranordnung verbunden bleibt.

Aus der EP 1 914 062 A1 ist eine Einrichtung gemäß dem Oberbegriff des Anspruchs 1 in Form eines Reparatursatzes zum Abdichten und Aufpumpen von Kraftfahrzeugreifen bekannt. Die Einrichtung weist eine Druckgasquelle, eine Ventil- und Verteilereinheit für Dichtmittel und Druckgas mit einer an die Druckgasquelle anschließbaren Einlassleitung und einer an den Kraftfahrzeugreifen anschließbaren, schlauchförmigen Auslassleitung, sowie ein Verbindungsmittel zur Energiezufuhr auf. Die Einrichtung ist in einem topfförmigen Gehäuse untergebracht, das als Abstützkörper dient und mittels mindestens eines Befestigungsmittels temporär an einem Fahrzeug befestigbar ist, z.B. an der Fahrzeugkarosserie oder am Fahrzeugrad. Als Druckgasquelle dient eine mit dem Abstützkörper verbundene Verdichtereinheit, die einen Antrieb und einen Verdichterabschnitt mit mindestens einem Arbeitsraum aufweist.

Die Aufgabe der vorliegenden Erfindung ist darin zu sehen, ein Reifenreparaturset zum bedarfsweisen Aufpumpen und/oder Abdichten eines auf einer Felge eines Fahrzeugrads montieren Reifens anzugeben, wobei die Handhabung des Reifenreparatursets im Vergleich zu den aus dem Stand der Technik bekannten Reifenreparatursets bzw. Pannensets deutlich vereinfacht ist. Des Weiteren soll ein entsprechendes Verfahren insbesondere zum Reparieren eines defekten Reifens angegeben werden. Diese Aufgabe wird insbesondere durch den Gegenstand des unabhängigen Patentanspruchs 1 gelöst, der ein Reifenreparaturset zum bedarfsweisen Aufpumpen und/oder Abdichten eines auf einer Felge eines Fahrzeugrads montierten Reifens betrifft. Erfindungsgemäß ist insbesondere vorgesehen, dass der Abstützkörper einen Flanschbereich aufweist, über den die Verdichterabschnitt vorzugsweise lösbar mit dem Abstützkörper verbunden ist. Dabei ist in einem in der Mittenausnehmung der Fahrzeugfelge eingesetzten Zustand des Abstützkörpers die Verdichtereinheit zumindest bereichsweise und vorzugsweise vollständig außerhalb der Mittenausnehmung der Fahrzeugfelge angeordnet. Vorteilhafte Weiterbildungen des erfindungsgemäßen Reifenreparatursets sind in den abhängigen Patentansprüchen 2 bis 10 angegeben.

Die der Erfindung zu Grunde liegende Aufgabe wird im Hinblick auf das Verfahren durch den Gegenstand des nebengeordneten Patentanspruchs 11 gelöst, der ein Verfahren zum Aufblasen und/oder Abdichten eines auf einer Felge eines Fahrzeugrads montierten Reifens betrifft. Vorteilhafte Weiterbildungen des erfindungsgemäßen Verfahrens sind in den abhängigen Patentansprüchen 12 bis 14 angegeben.

Das erfindungsgemäße Reifenreparaturset zeichnet sich insbesondere dadurch aus, dass das Reifenreparaturset insbesondere temporär an dem Fahrzeugrad montierbar ist. Im Vergleich zu den aus dem Stand der Technik bekannten Reifenreparatursets bzw. Pannensets liefert dies den entscheidenden Vorteil, dass nach der Reifenreparatur der Benutzer nicht mehr wieder das Reifenreparaturset auseinanderbauen und verstauen muss. Vielmehr ist erfindungsgemäß vorgesehen, dass im Falle beispielsweise einer Reifenpanne der Benutzer das Reifenreparaturset beispielsweise aus dem Kofferraum des Fahrzeugs entnimmt und auf die Fahrzeugfelge des zu reparierenden Fahrzeugrads setzt und dann das Reifenreparaturset aktiviert, um den Reifen entsprechend aufzupumpen und/oder ein Dichtmittel entsprechend auszubringen. Nach der Reparatur des Reifens bzw. nach dem Aufpumpen und/oder Abdichten des Reifens bleibt das Reifenreparaturset an der Fahrzeugfelge bzw. dem Fahrzeugrad montiert und muss nicht mehr demontiert werden.

Mit anderen Worten, der Benutzer kann unmittelbar nach dem Abschluss des Aufpump- bzw. Abdichtprozesses wieder in das Fahrzeug einsteigen und weiterfahren, beispielsweise zu einer entsprechenden KFZ-Werkstatt.

Die erfindungsgemäße Lösung vereinfacht nicht nur deutlich die Handhabung des Reifenreparatursets, sondern erhöht zudem die Verkehrssicherheit, da der Benutzer des Reifenreparatursets nur kurzzeitig das Fahrzeuginnere verlassen muss und somit weniger durch den Verkehr gefährdet ist.

Gemäß einem weiteren Aspekt der Erfindung weist das Reifenreparaturset somit einen insbesondere napf- oder topfförmigen Abstützkörper auf, der insbesondere bedarfsweise an der Fahrzeugfelge austauschbar befestigbar und insbesondere in der Mittenausnehmung der Fahrzeugfelge austauschbar aufnehmbar ist. Das Reifenreparaturset weist ferner eine mit dem insbesondere napf- oder topfförmigen Abstützkörper verbundene Verdichtereinheit mit einem Antrieb und einem Verdichterabschnitt mit mindestens einem Arbeitsraum auf.

Insbesondere kann dabei der Abstützkörper eine an die Mittenausnehmung der Fahrzeugfelge angepasste Größe und/oder Geometrie aufweisen. Hierbei bietet es sich an, dass der Abstützkörper zumindest teilweise und vorzugsweise vollständig in der Mittenausnehmung der Fahrzeugfelge aufnehmbar ist.

Vorzugsweise sind dem Abstützkörper insbesondere reversibel lösbare Verbindungsmittel, insbesondere in Gestalt von Rastverbindungsmittel, zugeordnet sind zum lösbaren Fixieren des Abstützkörpers an der Fahrzeugfelge. Die Fixierung mit Hilfe der Verbindungsmittel kann beispielsweise dadurch erfolgen, dass diese in der Mittenausnehmung mit entsprechend komplementär ausgeführten Verbindungsmitteln zusammenwirken. Alternativ oder zusätzlich hierzu können die Verbindungsmittel aber auch mit anderen Komponenten der Fahrzeugfelge zusammenwirken, beispielsweise durch Klemmung an den Radschrauben der Fahrzeugfelge.

Die insbesondere reversibel lösbaren Verbindungsmittel des Abstützkörpers sind vorzugsweise derart ausgebildet, dass das Reifenreparaturset auch bei Fahrt des Fahrzeugs sicher an der Fahrzeugfelge fixiert ist.

Gemäß Realisierungen des Reifenreparatursets ist vorgesehen, dass der Antrieb der Verdichtereinheit zumindest teil- oder bereichsweise in dem Abstützkörper aufgenommen ist.

Vorzugsweise ist der Antrieb der Verdichtereinheit ein elektromotorischer Antrieb, dem bedarfsweise und vor allem im Stillstand des Fahrzeugs insbesondere über eine zumindest bereichsweise außerhalb des Fahrzeugs verlaufende elektrische Leitung die zum Betrieb des Antriebs notwendige elektrische Energie zuführbar ist.

Das Reifenreparaturset kann insbesondere optional einen Dichtmittelbehälter aufweisen, der vorzugsweise zumindest bereichsweise im Wesentlichen eine torusförmige und insbesondere rotationstorusförmige Formgebung aufweist.

Der Dichtmittelbehälter ist derart strömungsmäßig mit dem Verdichterabschnitt und insbesondere mit dem mindestens einen Arbeitsraum des Verdichterabschnitts insbesondere lösbar verbunden oder verbindbar, dass zum Ausbringen eines Dichtmittels dem Dichtmittelbehälter zumindest bedarfsweise Druckluft zugeführt werden kann.

Ferner kann der Dichtmittelbehälter vorzugsweise eine Dichtmittel-Auslasskupplung insbesondere in Gestalt einer Schnellkupplung aufweisen, über die ein Auslass des Dichtmittelbehälters bedarfsweise mit einem Ventil des Reifens strömungsmäßig verbindbar ist.

In diesem Zusammenhang wäre es denkbar, dass der Dichtmittelbehälter (mechanisch) mit der Fahrzeugfelge und/oder mit dem Abstützkörper und/oder der Verdichtereinheit insbesondere lösbar verbunden oder verbindbar ist. Allerdings ist auch eine "freistehende" Ausführungsform des Dichtmittelbehälters denkbar.

Demgemäß kann gemäß Ausführungsformen des erfindungsgemäßen Reifenreparatursets dieses einen insbesondere napf- oder topfförmigen Abstützkörper aufweisen, der in der Mittenausnehmung der Fahrzeugfelge austauschbar aufnehmbar ist, um das Reifenreparaturset insbesondere temporär an dem Fahrzeugrad zu montieren.

Gemäß diesen Ausführungsformen des erfindungsgemäßen Reifenreparatursets kann das Reifenreparaturset ferner eine Verdichtereinheit mit einem Antrieb und einem Verdichterabschnitt mit mindestens einem Arbeitsraum sowie einen zumindest bereichsweise torusförmigen und insbesondere rotationstorusförmigen Dichtmittelbehälter aufweisen, wobei der zumindest bereichsweise torusförmige und insbesondere rotationstorusförmige Dichtmittelbehälter zumindest teil- oder bereichsweise den Verdichterabschnitt der Verdichtereinheit umgibt.

Mit anderen Worten, bei diesen Ausführungsformen des erfindungsgemäßen Reifenreparatursets sind alle zum Ausbringen eines Dichtmittels bzw. zum bedarfsweisen Aufpumpen eines Reifens notwendigen strukturellen Komponenten in dem Reifenreparaturset vollständig integriert.

Insbesondere ist bei der erfindungsgemäßen Lösung die Zusammenstellung der strukturellen Komponenten des Reifenreparatursets so gewählt, dass das Reifenreparaturset eine besonders kompakte Bauform angepasst an die Größe und Geometrie der Felge des Fahrzeugrads aufweist. Hierbei wird Sorge getragen, dass im an der Fahrzeugfelge angebrachten Zustand des Reifenreparatursets die Fahrzeugbreite - wenn überhaupt - nur geringförmig vergrößert wird, und zwar selbst mit einem an den Verdichterabschnitt angeschlossenen Dichtmittelbehälter.

Dies zeichnet sich beispielsweise dadurch aus, dass der Dichtmittelbehälter des erfindungsgemäßen Reifenreparatursets zumindest bereichsweise torusförmig und insbesondere rotationstorusförmig aufgebaut ist. Eine derartige Form garantiert ein relativ großes Volumen für das bereitzustellende Dichtmittel, während gleichzeitig der innere Bereich der Torusform ausgenutzt werden kann, um zumindest teil- oder bereichsweise den Verdichterabschnitt der Verdichtereinheit aufzunehmen. Dies hat den entscheidenden Vorteil, dass nur relativ kurze Druckluftleitungen von dem Verdichterabschnitt der Verdichtereinheit zu dem Dichtmittelbehälter notwendig sind, was die Verschleißanfälligkeit einerseits aber auch etwaige Druckluftverluste andererseits reduziert.

Als weiteren Vorteil der Torusform des Dichtmittelbehälters sei genannt, dass beim Einleiten von Druckluft eine optimale Durchmischung und somit ein besonders effizientes Ausbringen des Dichtmittels realisierbar ist.

Allgemein ausgedrückt weist das erfindungsgemäße Reifenreparaturset vorzugsweise einen insgesamt zumindest im Wesentlichen rotationssymmetrischen Aufbau auf, wobei in einem an der Fahrzeugfelge montierten Zustand des Reifenreparatursets der Schwerpunkt des Reifenreparatursets auf der Zentralachse des Fahrzeugrads liegt. Dies gilt auch dann, wenn bei dem Reifenreparaturset der Dichtmittelbehälter an dem Verdichterabschnitt angeschlossenen ist. Auf diese Weise tritt keine oder - wenn überhaupt nur eine geringe Unwucht auf, wenn das Fahrzeug mit dem an der Fahrzeugfelge montierten Reifenreparatursets fährt.

Gemäß bevorzugten Ausführungsformen des erfindungsgemäßen Reifenreparatursets ist vorgesehen, dass der Abstützkörper eine an die Mittenausnehmung der Fahrzeugfelge angepasste Größe und/oder Geometrie aufweist. Insbesondere ist der Abstützkörper des Reifenreparatursets derart dimensioniert und ausgebildet, dass der Abstützkörper vorzugsweise vollständig in der Mittenausnehmung der Fahrzeugfelge aufnehmbar ist.

Grundsätzlich bietet es sich an, dass der Abstützkörper insbesondere reversibel lösbare Verbindungsmittel aufweist, um den Abstützkörper vorzugsweise lösbar an der Fahrzeugfelge, wie beispielsweise in der Mittenausnehmung der Fahrzeugfelge oder an Radschrauben der Fahrzeugfelge, zu fixieren.

Bei den insbesondere reversibel lösbaren Verbindungsmitteln kann es sich beispielsweise um Rastverbindungsmittel, wie beispielsweise Rastnasen handeln, die selbstständig beim Einsetzen des Abstützkörpers in die Mittenausnehmung verrasten und den Abstützkörper entsprechend fixieren.

Insbesondere sollten in diesem Zusammenhang in vorteilhafter Weise die insbesondere reversibel lösbaren Verbindungsmittel des Abstützkörpers derart ausgebildet sein, dass das Reifenreparaturset auch bei Fahrt des Fahrzeugs sicher an der Fahrzeugfelge fixiert ist. Dies gilt auch dann, wenn bei dem Reifenreparaturset der Dichtmittelbehälter an dem Verdichterabschnitt angeschlossenen ist.

Unter einer "sicheren Fixierung" des Reifenreparatursets an der Fahrzeugfelge bzw. dem Fahrzeugrad ist insbesondere zu verstehen, dass es bei einer Geschwindigkeit von bis zu beispielsweise 100 km/h fest an dem Fahrzeugrad verbleibt, selbst wenn das Fahrzeugrad Vibrationen oder Querbeschleunigungen ausgesetzt ist.

Ferner ist von Vorteil, dass der Abstützkörper eine Art Flanschbereich aufweist, über den die Verdichtereinheit lösbar mit dem Abstützkörper verbunden ist. In einem in der Mittenausnehmung der Fahrzeugfelge eingesetzten Zustand des Abstützkörpers sind dabei die Verdichtereinheit und der zumindest bereichsweise torusförmige und insbesondere rotationstorusförmige Dichtmittelbehälter vorzugsweise vollständig außerhalb der Mittenausnehmung der Fahrzeugfelge angeordnet.

Diese Ausführungsform liefert verschiedene Vorteile. Insbesondere wird eine besonders kompakte Bauform erreicht, wobei zumindest in einem Zustand, in welchem der Dichtmittelbehälter zumindest bereichsweise entleert ist, der Schwerpunkt des Reifenreparatursets auf der Rotationsachse des Fahrzeugrads liegt und insbesondere innerhalb der Mittenausnehmung der Fahrzeugfelge. Auf diese Weise ist eine besonders sichere Lagerung des Reifenreparatursets an der Fahrzeugfelge realisierbar.

Gemäß Realisierungen des erfindungsgemäßen Reifenreparatursets weist die Verdichtereinheit mindestens eine mit einer Druckseite des Verdichterabschnitts strömungsmäßig verbundene Druckluftkupplung insbesondere in Gestalt einer Schnellkupplung auf.

Alternativ oder zusätzlich hierzu weist der Dichtmittelbehälter vorzugsweise mindestens eine Druckluftkupplung insbesondere in Gestalt einer Schnellkupplung auf.

Über die mindestens eine Druckluftkupplung der Verdichtereinheit und/oder über die mindestens eine Druckluftkupplung des Dichtmittelbehälters ist dann der Dichtmittelbehälter bedarfsweise mit Druckluft beaufschlagbar.

Insbesondere sind in diesem Zusammenhang Schnellkupplungen als Druckluftkupplungen bevorzugt, die einen einfachen Zusammenbau des Reifenreparatursets sowie eine einfache Demontage des Reifenreparatursets ermöglichen, wenn beispielsweise Komponenten des Reifenreparatursets gewartet oder ausgetauscht werden müssen.

In gleicher Weise bietet es sich an, dass der Dichtmittelbehälter mindestens eine Dichtmittel-Auslasskupplung insbesondere in Gestalt einer Schnellkupplung aufweist, über die ein Auslass des Dichtmittelbehälters bedarfsweise mit einem Ventil des Reifens strömungsmäßig verbindbar ist. Hierzu gehört zu dem Reifenreparaturset vorzugsweise eine entsprechende mit der Dichtmittel-Auslasskupplung des Dichtmittelbehälters verbindbare Fluidleitung, die andererseits über eine entsprechende Verlängerung oder einen entsprechenden Adapter mit dem Reifenventil des zu behandelnden Reifens strömungsmäßig verbindbar ist.

Im Hinblick auf den Schwerpunkt des Reifenreparatursets ist es von Vorteil, dass der Antrieb der Verdichtereinheit zumindest teil- oder bereichsweise und vorzugsweise vollständig in dem Abstützkörper aufgenommen ist. Dadurch ist sichergestellt, dass in einem Zustand, wenn der Abstützkörper in der Mittenausnehmung der Fahrzeugfelge aufgenommen ist, der Schwerpunkt des Reifenreparatursets ebenfalls vorzugsweise in die Mittenausnehmung der Fahrzeugfelge fällt.

Der Antrieb der Verdichtereinheit kann beispielsweise ein elektromotorischer Antrieb sein. Alternativ hierzu sind selbstverständlich aber auch andere Antriebe denkbar. Ein elektromotorischer Antrieb bietet sich jedoch insofern an, inwiefern dieser bedarfsweise beispielsweise über eine zumindest bereichsweise außerhalb des Fahrzeugs verlaufende elektrische Leitung (Verlängerungskabel) beispielsweise in eine 12-Volt-Buchse im Fahrzeug zur Speisung des Antriebs eingesteckt werden kann.

Somit muss der Benutzer nach dem Einsetzen des Reifenreparatursets bzw. des Abstützkörpers in die Mittenausnehmung der Fahrzeugfelge und nach dem Verbinden der Dichtmittel-Auslasskupplung des Dichtmittelbehälters mit dem Ventil des Reifens lediglich das Verlängerungskabel beispielsweise in die Buchse eines bordnetzbetriebenen Zigarettenanzünders einstecken, um die zu zum Betrieb des Antriebs der Verdichtereinheit notwendige elektrische Energie dem Antrieb zuzuführen. Selbstverständlich erfolgt dies nur im Stillstand des Fahrzeugs.

Gemäß einem weiteren Aspekt der vorliegenden Erfindung ist vorgesehen, dass der Dichtmittelbehälter lös- und/oder austauschbar mit der Verdichtereinheit und/oder dem Abstützkörper verbunden oder verbindbar ist. Damit ist sichergestellt, dass der Dichtmittelbehälter nur bedarfsweise mit der Verdichtereinheit verbunden werden kann, beispielsweise dann, wenn eine Abdichtung des Reifens notwendig ist. Ferner kann der Dichtmittelbehälter nach Einsatz des Reifenreparatursets entsprechend ausgetauscht werden kann.

Zum lös- und/oder austauschbaren Verbinden des Dichtmittelbehälters mit der Verdichtereinheit und/oder dem Abstützkörper kann dem Dichtmittelbehälter mindestens ein Befestigungsmittel, insbesondere in Gestalt einer Schraube, eines Schnellverschlusses und/oder einer Schnellsicherung, zugeordnet sein.

In diesem Zusammenhang bietet es sich an, dass der Dichtmittelbehälter vorzugsweise einen im Hinblick auf den Abstützkörper insbesondere distal angeordneten Flanschbereich aufweist, der zumindest bereichsweise die zentrale Öffnung des torusförmigen und insbesondere rotationstorusförmigen Dichtmittelbehälters umspannt. In vorteilhafter Weise ist in dem vorzugsweise vorgesehenen Flanschbereich eine im Hinblick auf eine Rotationsachse des torusförmigen und insbesondere rotationstorusförmigen Dichtmittelbehälters zentral angeordnete Bohrung ausgebildet, von welcher zumindest bereichsweise ein Befestigungsmittel, insbesondere in Gestalt einer Schraube, eines Schnellverschlusses und/oder einer Schnellsicherung, aufgenommen werden kann.

Vorzugsweise wird der Dichtmittelbehälter über ein einziges Befestigungsmittel, insbesondere in Gestalt einer Schraube, eines Schnellverschlusses und/oder einer Schnellsicherung, mit der Verdichtereinheit und/oder dem Abstützkörper verbunden. Auf diese Weise ist ein besonders schneller Austausch bzw. ein besonders schnelles Auswechseln des Dichtmittelbehälters möglich.

Insbesondere sollte das einzige Befestigungsmittel auf der Rotationsachse des Reifenreparatursets liegen, damit in einem Zustand, wenn das Fahrzeug wieder fährt und das Reifenreparaturset nach wie vor an der Fahrzeugfelge angebracht ist, keine Unwucht auftritt.

Alternativ oder zusätzlich zu den zuvor genannten Ausführungsformen ist gemäß Realisierungen des erfindungsgemäßen Reifenreparatursets vorgesehen, dass der Dichtmittelbehälter einen Schnittstellenbereich aufweist, über der der Dichtmittelbehälter lös- und/oder austauschbar mit der Verdichtereinheit und/oder dem Abstützkörper verbindbar oder verbunden ist.

Um zu verhindern, dass in einem an der Fahrzeugfelge montierten Zustand des Reifenreparatursets der Dichtmittelbehälter zu weit aus der Fahrzeugfelge hervorragt, ist insbesondere vorgesehen, dass der Dichtmittelbehälter auf einer dem Schnittstellenbereich gegenüberliegenden Seite zumindest im Wesentlichen flach (eben) ausgeführt ist.

Gemäß Ausführungsbeispielen des erfindungsgemäßen Reifenreparatursets ist vorgesehen, dass in einem Zustand, in welchem der der Dichtmittelbehälter mit dem Abstützkörper und/oder mit der Verdichtereinheit verbunden ist, das Reifenreparaturset zumindest im Wesentlichen einen rotationssymmetrischen, insbesondere pilzförmigen Aufbau aufweist, wobei vorzugsweise der Dichtmittelbehälter über ein einziges Befestigungsmittel, insbesondere in Gestalt einer Schraube, eines Schnellverschlusses und/oder einer Schnellsicherung, mit der Verdichtereinheit und/oder dem Abstützkörper verbunden ist, wobei das einzige Befestigungsmittel insbesondere auf der Rotationsachse des Reifenreparatursets liegt. Damit ist eine besonders kompakte Lösung des Reifenreparatursets gegeben.

Allgemein ausgedrückt ist es von Vorteil, dass das Reifenreparaturset zumindest im Wesentlichen einen rotationssymmetrischen, insbesondere pilzförmigen Aufbau aufweist. Ein solcher rotationssymmetrischer Aufbau gestattet es, dass eine Weiterfahrt des Fahrzeugs trotz installiertem Reifenreparaturset möglich ist, ohne dass zumindest eine merkbare oder das Fahrverhalten störende Veränderung der Fahreigenschaft auftritt, da durch das Reifenreparaturset keine Unwucht generiert wird.

Gemäß Realisierungen des erfindungsgemäßen Reifenreparatursets ist vorgesehen, dass der Dichtmittelbehälter zwei vorzugsweise zumindest im Wesentlichen identisch aber spiegelverkehrt ausgebildete torussegmentförmige Bereiche aufweist, die vorzugsweise miteinander in Fluidverbindung stehen. Die zwei torussegmentförmigen Bereiche weisen jeweils zwei einander zugewandte Stirnseiten auf.

In diesem Zusammenhang bietet es sich an, dass zwischen den einander zugewandten Stirnseiten der beiden torussegmentförmigen Bereiche mindestens ein Druckluftanschluss zum Zuführen von Druckluft zu dem Dichtmittelbehälter und mindestens ein Dichtmittelauslass angeordnet sind. Insbesondere sollte der mindestens eine Druckluftanschluss und der mindestens eine Dichtmittelauslass vorzugsweise gegenüberliegend angeordnet sein.

Dies hat den Vorteil, dass die in den Dichtmittelbehälter eingespeiste Druckluft nur über einen relativ langen Weg durch den Dichtmittelbehälter erst zu dem Dichtmittelauslass gelangt, was ein besonders effizientes Vermischen und Austreiben des Dichtmittels aus dem Dichtmittelbehälter gestattet.

Die Verdichtereinheit des erfindungsgemäßen Reifenreparatursets kann als Verdichterabschnitt insbesondere einen Kompressor umfassen, der vorzugsweise mit dem Antrieb gekoppelt ist. Grundsätzlich kann der Verdichtereinheit auch eine Puffereinheit zugeordnet sein, die beispielsweise (elektrische) Energie für eine begrenzte Betriebsdauer bereitstellt.

Gemäß der erfindungsgemäßen Ausgestaltung des Reifenreparatursets umfasst die Verdichtereinheit einen Antrieb und einen Verdichterabschnitt mit mindestens einem Arbeitsraum, wobei der Antrieb und der Verdichterabschnitt axial zueinander versetzt angeordnet sind. In diesem Zusammenhang ist der Verdichterabschnitt einer Außenseite und der Antrieb einer Innenseite zugewandt sein, wobei die Verdichtereinheit in einem Zustand, wenn das Reifen reparaturset an dem Fahrzeugrad montiert ist, zumindest bereichsweise entlang ihrer axialen Erstreckung in der Mittenausnehmung, wie beispielsweise dem Mittenloch der Fahrzeugfelge, aufgenommen ist.

Die Verdichtereinheit ist vorzugsweise modulartig aufgebaut und kann insbesondere eine Verdichterwelle aufweisen, die insbesondere parallel zu einer Zentralachse des Fahrzeugrads angeordnet ist, wenn das Reifenreparaturset an dem Fahrzeugrad montiert ist. Dabei fällt die Verdichterwelle vorzugsweise mit der Zentralachse des Fahrzeugrads zusammen. Die Verdichterwelle treibt den Kompressor an.

Gemäß einer Weiterbildung dieser Ausgestaltung weist ein Antrieb der Verdichtereinheit eine Längsachse auf, die parallel zur Zentralachse des Fahrzeugrads angeordnet ist, wenn das Reifenreparaturset an dem Fahrzeugrad angeordnet ist, wobei der Antrieb mittelbar oder unmittelbar mit der Verdichterwelle gekoppelt ist. Es sind alternative Gestaltungen denkbar, bei denen die Verdichterwelle von der Zentralachse beabstandet und parallel zu dieser angeordnet ist. Es versteht sich von selbst, dass zwischen dem Antrieb und dem Verdichterabschnitt mindestens eine Übersetzungsstufe oder Getriebestufe zwischengeschaltet sein kann.

Gemäß beispielhaften Ausgestaltungen des Reifenreparatursets umfasst die Verdichtereinheit mehrere Arbeitsräume, die in einem Zustand, wenn das Reifenreparaturset am Fahrzeugrad montiert ist, vorzugsweise um eine Zentralachse des Fahrzeugrads gruppiert angeordnet sind. Die Arbeitsräume sind insbesondere als Verdrängerkammern oder Verdrängerzylinder ausgebildet. Vorzugsweise sind die Arbeitsräume um die Zentralachse versetzt angeordnet, etwa sternförmig oder einander gegenüberliegend.

Gemäß einer weiteren beispielhaften Ausgestaltung des erfindungsgemäßen Reifenreparatursets ist die Verdichtereinheit als Kolbenverdichtereinheit ausgeführt, wobei die Verdichtereinheit zumindest einen Kolben, insbesondere einen Hubkolben oder Rotationskolben, umfasst, der vorzugsweise über einen Exzenterkoppeltrieb antreibbar ist.

In einem Zustand, in welchem das Reifenreparaturset am Fahrzeugrad montiert ist, ist der Kolben vorzugsweise senkrecht zur Zentralachse orientiert. Der mindestens eine Kolben kann als Zylinderkolben gestaltet sein. Der Kolben kann aber auch als Ovalkolben oder Flachkolben gestaltet sein und einen nicht kreisförmigen Querschnitt umfassen. Der Arbeitsraum ist entsprechend an die Gestaltung des Kolbens angepasst.

Gemäß einer Weiterbildung zumindest einer der zuvor beschriebenen Ausgestaltungen weist die Verdichtereinheit mindestens zwei als Arbeitszylinder ausgestaltete Arbeitsräume auf, die in einem Zustand, in welchem das Reifenreparaturset am Fahrzeugrad montiert ist, um die Zentralachse des Fahrzeugrads angeordnet sind. Vorzugsweise ist dabei eine Längserstreckungsrichtung der Arbeitszylinder senkrecht zur Zentralachse orientiert. Die Arbeitsräume können etwa sternförmig um die Zentralachse angeordnet sein.

Gemäß einer Weiterbildung weist die Verdichtereinheit zumindest einen Doppelkolben, vorzugsweise einen starren Doppelkolben, auf, wobei der Doppelkolben zwei voneinander abgewandte Kolbenabschnitte aufweist, die über ein Treibstück miteinander verbunden sind. Auf diese Weise kann auf einen aufwendigen Kurbeltrieb verzichtet werden. Der Exzenterkoppeltrieb kann einfach gestaltet sein.

Gemäß einer Weiterbildung dieser Ausgestaltung weist das Treibstück eine Kulisse auf, in der ein Gleitstück oder Gleitstein geführt ist, wobei das Gleitstück im Betrieb exzentrisch umläuft, und wobei das Treibstück durch das Gleitstück translatorisch antreibbar ist, um das Druckfluid in den Arbeitszylindern zu komprimieren. Dass kolbentragende Treibstück kann dabei längsoszillatorisch angetrieben sein.

Gemäß einer Weiterbildung zumindest einer der zuvor beschriebenen Ausgestaltungen weist die Verdichtereinheit des erfindungsgemäßen Reifenreparatursets mehrere axial voneinander versetzte Kolben auf, die über eine gemeinsame Verdichterwelle antreibbar sind, die mehrere Exzenterabschnitte aufweisen. Vorzugsweise sind mehrere Reihen aus Kolben vorgesehen, die axial voneinander versetzt sind.

Wie bereits ausgeführt, betrifft die vorliegende Erfindung ferner ein Verfahren zum Aufpumpen und/oder Abdichten eines auf einer Felge eines Fahrzeugrads montierten Reifens.

Hierbei wird ein Reifenreparaturset der zuvor beschriebenen, erfindungsgemäßen Art bereitgestellt und der Abstützkörper des Reifenreparatursets in die Mittenausnehmung der Fahrzeugfelge gesetzt. Ferner wird ein Druckluftauslass der Verdichtereinheit mit dem Reifenventil des Reifens strömungsmäßig verbunden und der Antrieb der Verdichtereinheit aktiviert.

Nach dem Deaktivieren des Antriebs der Verdichtereinheit kann das Reifenreparaturset in seinem an der Fahrzeugfelge montierten Zustand verbleiben, auch wenn die Fahrt des Fahrzeugs wieder aufgenommen wird.

Die vorliegende Erfindung betrifft ferner ein Verfahren zum Ausbringen eines Dichtmittels zum Abdichten eines auf einer Felge eines Fahrzeugrads montierten Reifens.

Dabei ist vorgesehen, dass zunächst ein Reifenreparaturset der zuvor beschriebenen erfindungsgemäßen Art bereitgestellt wird. Anschließend wird der Abstützkörper des Reifenreparatursets in die Mittenausnehmung der Fahrzeugfelge eingesetzt, ein Dichtmittelauslass des Dichtmittelbehälters mit dem Reifenventil des abzudichtenden Reifens strömungsmäßig verbunden und der Antrieb der Verdichtereinheit aktiviert.

Zum Aktivieren des Antriebs der Verdichtereinheit wird diesem über eine zumindest bereichsweise außerhalb der Fahrzeugfelge und dem Fahrzeug verlaufende elektrische Leitung (beispielsweise in Gestalt eines Verlängerungskabels) elektrische Energie vorzugsweise aus dem Bordnetz des Fahrzeugs zugeführt.

Gemäß einem Aspekt des erfindungsgemäßen Verfahrens ist vorgesehen, dass der Antrieb der Verdichtereinheit manuell oder automatisch, vorzugsweise wahlweise automatisch deaktiviert wird oder deaktivierbar ist, insbesondere, wenn ein vorzugsweise von dem Reifenreparaturset messbarer oder ermittelbarer Ist-Druck in dem abzudichtenden Reifen einen vorab festgelegten oder festlegbaren Soll-Druck erreicht oder erreicht hat.

Insbesondere zeichnet sich die erfindungsgemäße Lösung dadurch aus, dass nach dem Deaktivieren des Antriebs der Verdichtereinheit das Reifenreparaturset in seinem an der Fahrzeugfelge montierten Zustand verbleibt oder verbleiben kann, auch wenn die Fahrt des Fahrzeugs wiederaufgenommen wird.

Dieser Aspekt liefert den entscheidenden Vorteil, dass - sollte sich nach dem Einbringen des Dichtmittels in den abzudichtenden Reifen der Reifendruck wieder verringern, weil sich beispielsweise das Dichtmittel setzt, der Benutzer des Reifenreparatursets lediglich den Antrieb der Verdichtereinheit wieder aktivieren muss, um den Ist-Druck im Reifen auf den Soll-Druck zu bringen. Da das Reifenreparaturset nach wie vor in seinem an der Fahrzeugfelge montierten Zustand vorliegt, kann dies von dem Benutzer mit wenigen Handgriffen erledigt werden.

Gemäß einem weiteren Aspekt der Erfindung ist vorgesehen, dass nach dem Ausbringen des Dichtmittels der Druckmittelbehälter des Reifenreparatursets ausgetauscht wird.

Nachfolgend wird unter Bezugnahme auf die beiliegenden Zeichnungen eine exemplarische Ausführungsform des erfindungsgemäßen Reifenreparatursets näher beschrieben.

Es zeigen:
- FIG. 1: schematisch und in einer isometrischen Ansicht von oben eine exemplarische Ausführungsform des erfindungsgemäßen Reifenreparatursets mit einer an den Dichtmittelbehälter insbesondere über eine Clips- oder Bajonettverbindung oder einer anderen Schnellkupplung angeschlossenen Verbindungsleitung;
- FIG. 2: schematisch und in einer isometrischen Ansicht von unten die exemplarische Ausführungsform des erfindungsgemäßen Reifenreparatursets;
- FIG. 3: schematisch und in einer isometrischen Ansicht von unten das Reifenreparaturset gemäß FIG. 2, jedoch ohne der an den Dichtmittelbehälter angeschlossenen Verbindungsleitung;
- FIG. 4: schematisch und in einer Seitenansicht das Reifenreparaturset gemäß FIG. 3;
- FIG. 5: schematisch und in einer teilgeschnittenen Ansicht das Reifenreparaturset gemäß FIG. 4;
- FIG. 6: schematisch und in einer isometrischen Ansicht der Abstützkörper der exemplarischen Ausführungsform des erfindungsgemäßen Reifenreparatursets mit dem zumindest bereichsweise in dem Abstützkörper angeordneten Antrieb der Verdichtereinheit;
- FIG. 7: schematisch und in einer isometrischen Ansicht den Abstützkörper gemäß FIG. 6, wobei der Verdichterabschnitt der Verdichtereinheit über einen Flanschbereich des Abstützkörpers mit dem Abstützkörper verbunden ist;

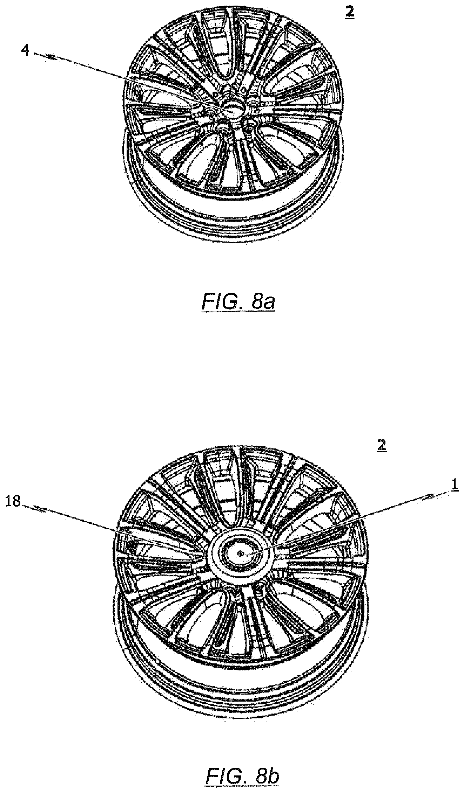

- FIG. 8a: schematisch und in einer isometrischen Ansicht eine exemplarische Ausführungsform einer Felge eines Fahrzeugrads ohne einen auf der Felge montierten Reifen; und
- FIG. 8b: schematisch und in einer isometrischen Ansicht die Felge gemäß FIG. 8a, wobei die exemplarische Ausführungsform des erfindungsgemäßen Reifenreparatursets gemäß FIG. 1 an der Felge des Fahrzeugrads montiert ist.

Das in den Zeichnungen gezeigte Reifenreparaturset 1 dient zum bedarfsweisen Aufpumpen und/oder Abdichten eines auf einer Felge 2 eines Fahrzeugrads montierten Reifens, wobei das Reifenreparaturset 1 insbesondere temporär an dem Fahrzeugrad bzw. an der Fahrzeugfelge 2 montierbar ist.

Im Wesentlichen weist die exemplarische Ausführungsform des erfindungsgemäßen Reifenreparatursets 1 hierzu einen napf- oder topfförmigen Abstützkörper 3 auf, der in der Mittenausnehmung 4 (d.h. insbesondere in dem Mittenloch) der Fahrzeugfelge 2 austauschbar aufnehmbar ist.

Des Weiteren weist das Reifenreparaturset 1 eine Verdichtereinheit 5 mit einem Antrieb und einem Verdichterabschnitt 7 mit mindestens einem Arbeitsraum auf.

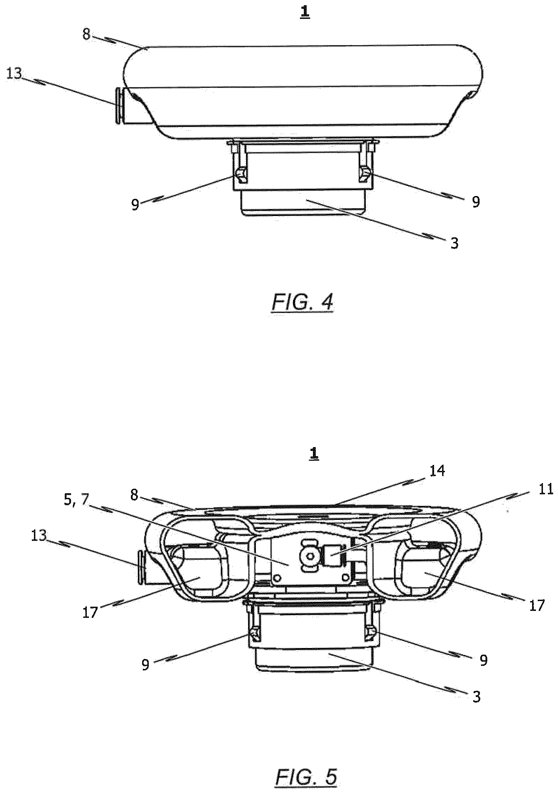

Darüber hinaus umfasst das Reifenreparaturset 1 optional einen zumindest bereichsweise torusförmigen und insbesondere rotationstorusförmigen Dichtmittelbehälter 8, der - wie es beispielsweise der Darstellung in FIG. 5 entnommen werden kann - zumindest teil- oder bereichsweise den Verdichterabschnitt 7 mit der Verdichtereinheit 5 umgibt.

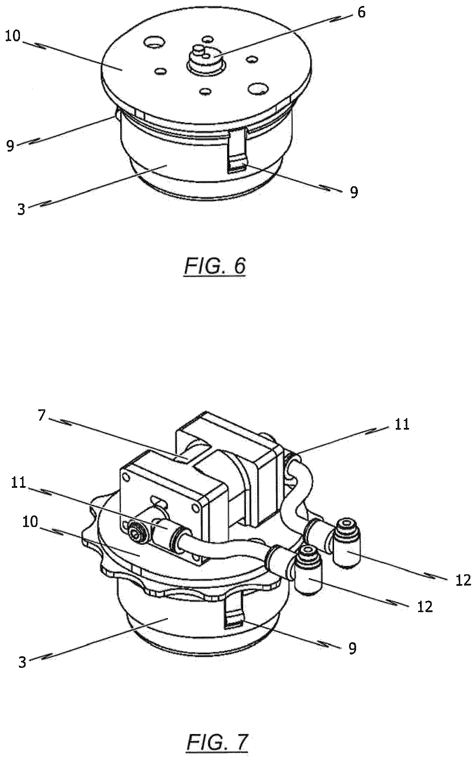

Der beispielsweise in FIG. 6 gezeigte insbesondere napf- oder topfförmige Abstützkörper 3 des Reifenreparatursets 1 weist eine an die Mittenausnehmung 4 der Fahrzeugfelge 2 angepasste Größe und/oder Geometrie auf, und zwar derart, dass der Abstützkörper 3 vorzugsweise vollständig in der Mittenausnehmung 4 der Fahrzeugfelge 2 aufnehmbar ist.

Ferner ist beispielsweise der Darstellung in FIG. 6 zu entnehmen, dass der Abstützkörper 3 insbesondere reversibel lösbare Verbindungsmittel 9, insbesondere in Gestalt von Rastverbindungsmittel, aufweist, die dazu dienen, den Abstützkörper 3 in der Mittenausnehmung 4 der Fahrzeugfelge 2 lösbar zu fixieren.

Die insbesondere reversibel lösbaren Verbindungsmittel 9 des Abstützkörpers 3 sind vorzugsweise derart ausgebildet, dass das Reifenreparaturset 1 auch bei Fahrt des Fahrzeugs sicher an der Fahrzeugfelge 2 fixiert ist.

Wie in FIG. 6 ebenfalls angedeutet, ist bei der exemplarischen Ausführungsform des erfindungsgemäßen Reifenreparatursets 1 vorgesehen, dass der vorzugsweise elektromotorische Antrieb der Verdichtereinheit 5 zumindest teil- oder bereichsweise und vorzugsweise vollständig in dem Abstützkörper 3 aufgenommen ist. In FIG. 6 ist dabei ein Exzenterkoppeltrieb 6 des Antriebs durch ein in einem Flanschbereich 10 des Abstützkörpers 3 zentral angeordnetes Mittenloch geführt.

Über den Flanschbereich 10 des Abstützkörpers 3 ist der Verdichterabschnitt 7 der Verdichtereinheit 5 vorzugsweise lösbar mit dem Abstützkörper 3 verbunden. In diesem Zusammenhang sei beispielsweise auf die Darstellung in FIG. 7 verwiesen.

Vorzugsweise ist dabei vorgesehen, dass in einem in der Mittenausnehmung 4 der Fahrzeugfelge 2 eingesetzten Zustand des Abstützkörpers 3 die Verdichtereinheit 5 und der zumindest bereichsweise torusförmige und insbesondere rotationstorusförmige Dichtmittelbehälter 8 vorzugsweise vollständig außerhalb der Mittenausnehmung 4 der Fahrzeugfelge 2 angeordnet sind.

Der Darstellung in FIG. 7 kann ferner entnommen werden, dass der Verdichterabschnitt 7 zwei jeweils mit einer Druckseite bzw. mit einem Arbeitsraum des Verdichterabschnitts 7 strömungsmäßig verbundene Druckluftkupplungen 11 in Gestalt von Schnellkupplungen aufweist.

Bei dem in den Zeichnungen gezeigten Ausführungsbeispiel kommt als Verdichterabschnitt 7 insbesondere ein Verdichterabschnitt 7 mit zwei gegenüberliegenden Arbeitsräumen zum Einsatz, wobei über einen mit dem Exzenterkoppeltrieb 6 antriebbaren Kolben abwechselnd das zu verdichtende Fluid (Luft) in den beiden Arbeitsräumen komprimiert wird. Zu diesem Zweck kommen bei der in FIG. 7 gezeigten Verdichtereinheit 5 auch insgesamt zwei jeweils mit einem Arbeitsraum des Verdichterabschnitts 7 strömungsmäßig verbundene Druckluftkupplungen 11 in Gestalt von Schnellkupplungen zum Einsatz.

In gleicher Weise sind dem Dichtmittelbehälter 8 zwei Druckluftkupplungen 12 in Gestalt von Schnellkupplungen zugeordnet, so dass Druckluftkupplungen 11 der Verdichtereinheit 5 sowie über die zwei Druckluftkupplungen 12 des Dichtmittelbehälters 8 und jeweils zwischengeschaltenen Verbindungsleitungen der Dichtmittelbehälter 8 bedarfsweise mit Druckluft beaufschlagbar ist.

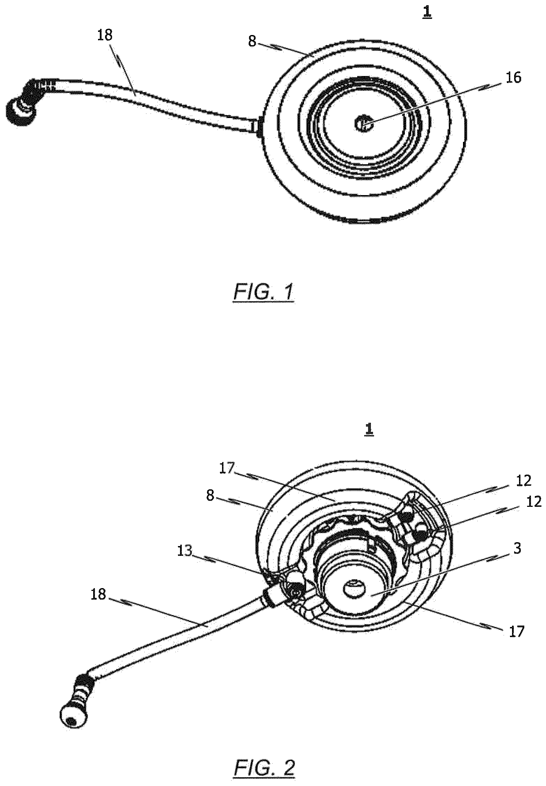

Wie es insbesondere den Darstellungen in FIG. 1 und FIG. 2 entnommen werden kann, ist dem Dichtmittelbehälter 8 der exemplarischen Ausführungsform des erfindungsgemäßen Reifenreparatursets 1 eine Dichtmittel-Auslasskupplung 13 in Gestalt einer Schnellkupplung zugeordnet, über die der Auslass des Dichtmittelbehälters 8 bedarfsweise, beispielsweise über eine Verbindungsleitung 18, mit einem Ventil des Reifens strömungsmäßig verbindbar ist.

Der teilgeschnittenen Ansicht in FIG. 5 kann insbesondere entnommen werden, dass der Dichtmittelbehälter 8 zwei zumindest im Wesentlichen identisch oder spiegelverkehrt ausgebildete torussegmentförmige Bereiche 17 aufweist, die vorzugsweise miteinander in Fluidverbindung stehen.

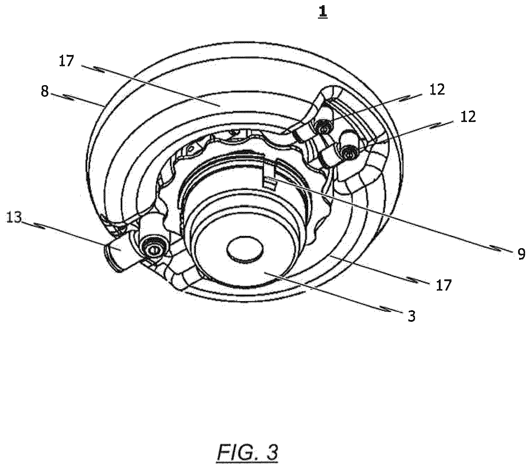

Der Ansicht von unten (beispielsweise FIG. 2 oder FIG. 3) kann entnommen werden, dass die beiden Druckluftanschlüsse 12 des Dichtmittelbehälters 8, die zur Zufuhr von Druckluft zu dem Dichtmittelbehälter 8 dienen, und der Dichtmittelauslass 13 einander gegenüberliegend angeordnet sind, und zwar jeweils zwischen zwei einander zugewandten Stirnseiten der beiden torussegmentförmigen Bereiche 17.

Der Dichtmittelbehälter 8 ist lös- und/oder austauschbar mit der Verdichtereinheit 5 und/oder dem Abstützkörper 3 verbunden.

Bei der in den Zeichnungen gezeigten exemplarischen Ausführungsform des erfindungsgemäßen Reifenreparatursets 1 ist in diesem Zusammenhang vorgesehen, dass der Dichtmittelbehälter 8 einen im Hinblick auf den Abstützkörper 3 insbesondere distal angeordneten Flanschbereich 14 bzw. flanschartigen Bereich aufweist, der zumindest bereichsweise die zentrale Öffnung des torusförmigen und insbesondere rotationstorusförmigen Dichtmittelbehälters 8 umspannt.

In dem Flanschbereich 14 oder flanschartigen Bereich ist eine im Hinblick auf eine Rotationsachse des torusförmigen und insbesondere rotationstorusförmigen Dichtmittelbehälters 8 zentral angeordnete Bohrung 15 ausgebildet, von welcher zumindest bereichsweise ein Befestigungsmittel 16, insbesondere eine Schraube, aufgenommen werden kann.

Vorzugsweise ist der Dichtmittelbehälter 8 über eine einzige Schraube 16 mit der Verdichtereinheit 5 und/oder dem Abstützkörper 3 verbunden, wobei die einzige Schraube 16 insbesondere auf der Rotationsachse des Reifenreparatursets 1 liegt.

Die Erfindung ist nicht auf die in den Zeichnungen gezeigte exemplarische Ausführungsform des erfindungsgemäßen Reifenreparatursets 1 beschränkt, sondern ergibt sich aus einer Zusammenschau sämtlicher hierin offenbarter Merkmale.

### Bezugszeichenliste

- 1: Reifenreparaturset
- 2: Fahrzeugfelge
- 3: Abstützkörper
- 4: Mittenausnehmung der Fahrzeugfelge
- 5: Verdichtereinheit
- 6: Exzenterkoppeltrieb des Antriebs der Verdichtereinheit
- 7: Verdichterabschnitt
- 8: Dichtmittelbehälter
- 9: Verbindungsmittel des Abstützkörpers
- 10: Flanschbereich des Abstützkörpers
- 11: Druckluftkupplung des Verdichterabschnitts
- 12: Druckluftkupplung des Dichtmittelbehälters
- 13: Dichtmittel-Auslasskupplung des Dichtmittelbehälters
- 14: Flanschbereich des Dichtmittelbehälters
- 15: zentral angeordnete Bohrung
- 16: Befestigungsmittel
- 17: torussegmentförmige Bereiche des Dichtmittelbehälters
- 18: Verbindungsleitung

## Patentansprüche

1. Reifenreparaturset (1) zum bedarfsweisen Aufpumpen und/oder Abdichten eines auf einer Felge (2) eines Fahrzeugrads montierten Reifens, wobei das Reifenreparaturset (1) insbesondere temporär an dem Fahrzeugrad montierbar ist und Folgendes aufweist:
- einen insbesondere napf- oder topfförmigen Abstützkörper (3), der insbesondere bedarfsweise an der Fahrzeugfelge (2) austauschbar befestigbar und insbesondere in der Mittenausnehmung (4) der Fahrzeugfelge (2) austauschbar aufnehmbar ist; und
- eine mit dem insbesondere napf- oder topfförmigen Abstützkörper (3) verbundene Verdichtereinheit (5) mit einem Antrieb und einem Verdichterabschnitt (7) mit mindestens einem Arbeitsraum, **dadurch gekennzeichnet, dass** der Antrieb und der Verdichterabschnitt (7) axial zueinander versetzt angeordnet sind und wobei der Antrieb einer Innenseite und der Verdichterabschnitt (7) einer Außenseite zugewandt ist, und wobei der Abstützkörper (3) einen Flanschbereich (10) aufweist, über den der Verdichterabschnitt (7) lösbar mit dem Abstützkörper (3) verbunden ist, wobei in einem in der Mittenausnehmung (4) der Fahrzeugfelge (2) eingesetzten Zustand des Abstützkörpers (3) die Verdichtereinheit (5) zumindest bereichsweise und vorzugsweise vollständig außerhalb der Mittenausnehmung (4) der Fahrzeugfelge (2) angeordnet ist.

2. Reifenreparaturset (1) nach Anspruch 1,
wobei der Abstützkörper (3) eine an die Mittenausnehmung (4) der Fahrzeugfelge (2) angepasste Größe und/oder Geometrie aufweist, und zwar insbesondere derart, dass der Abstützkörper (3) zumindest teilweise und vorzugsweise vollständig in der Mittenausnehmung (4) der Fahrzeugfelge (2) aufnehmbar ist, wobei dem Abstützkörper (3) insbesondere reversibel lösbare Verbindungsmittel (9), insbesondere in Gestalt von Rastverbindungsmittel, zugeordnet sind zum lösbaren Fixieren des Abstützkörpers (3) an der Fahrzeugfelge, wobei die insbesondere reversibel lösbaren Verbindungsmittel (9) des Abstützkörpers (3) insbesondere ausgebildet sind, das Reifenreparaturset (1) auch bei Fahrt des Fahrzeugs sicher an der Fahrzeugfelge (2) zu fixieren.

3. Reifenreparaturset (1) nach Anspruch 1 oder 2,
wobei der Antrieb der Verdichtereinheit (5) zumindest teil- oder bereichsweise in dem Abstützkörper (3) aufgenommen ist, und wobei der Antrieb der Verdichtereinheit (5) vorzugsweise ein elektromotorischer Antrieb ist, dem bedarfsweise und vor allem im Stillstand des Fahrzeugs insbesondere über eine zumindest bereichsweise außerhalb des Fahrzeugs verlaufende elektrische Leitung die zum Betrieb des Antriebs notwendige elektrische Energie zuführbar ist.

4. Reifenreparaturset (1) nach einem der Ansprüche 1 bis 3,
wobei das Reifenreparaturset (1) insbesondere optional einen Dichtmittelbehälter (8) aufweist, der vorzugsweise zumindest bereichsweise im Wesentlichen eine torusförmige und insbesondere rotationstorusförmige Formgebung aufweist, wobei der Dichtmittelbehälter (8) derart strömungsmäßig mit dem Verdichterabschnitt (7) und insbesondere mit dem mindestens einen Arbeitsraum des Verdichterabschnitts (7) insbesondere lösbar verbunden oder verbindbar ist, dass zum Ausbringen eines Dichtmittels dem Dichtmittelbehälter (8) zumindest bedarfsweise Druckluft zugeführt werden kann, wobei der Dichtmittelbehälter (8) vorzugsweise eine Dichtmittel-Auslasskupplung (13) insbesondere in Gestalt einer Schnellkupplung aufweist, über die ein Auslass des Dichtmittelbehälters (8) bedarfsweise mit einem Ventil des Reifens strömungsmäßig verbindbar ist.

5. Reifenreparaturset (1) nach Anspruch 4,
wobei der Dichtmittelbehälter (8) mit der Fahrzeugfelge (2) und/oder mit dem Abstützkörper (3) und/oder der Verdichtereinheit (5) insbesondere lösbar verbunden oder verbindbar ist.

6. Reifenreparaturset (1) nach Anspruch 4 oder 5,
wobei die Verdichtereinheit (5) mindestens eine mit einer Druckseite des Verdichterabschnitts (7) strömungsmäßig verbundene Druckluftkupplung (11) insbesondere in Gestalt einer Schnellkupplung aufweist; und/oder
wobei der Dichtmittelbehälter (8) mindestens eine Druckluftkupplung (12) insbesondere in Gestalt einer Schnellkupplung aufweist,
und wobei über die mindestens eine Druckluftkupplung (11) der Verdichtereinheit (5) und/oder über die mindestens eine Druckluftkupplung (12) des Dichtmittelbehälters (8) der Dichtmittelbehälter (8) bedarfsweise mit Druckluft beaufschlagbar ist.

7. Reifenreparaturset (1) nach einem der Ansprüche 4 bis 6,
wobei der Dichtmittelbehälter (8) lös- und/oder austauschbar mit der Verdichtereinheit (5) und/oder dem Abstützkörper (3) verbindbar oder verbunden ist, wobei hierzu dem Dichtmittelbehälter (8) mindestens ein Befestigungsmittel (16), insbesondere in Gestalt einer Schraube, eines Schnellverschlusses und/oder einer Schnellsicherung, zugeordnet ist.

8. Reifenreparaturset (1) nach einem der Ansprüche 4 bis 7,
wobei der Dichtmittelbehälter (8) einen Schnittstellenbereich aufweist, über der der Dichtmittelbehälter (8) lös- und/oder austauschbar mit der Verdichtereinheit (5) und/oder dem Abstützkörper (3) verbindbar oder verbunden ist, wobei auf einer dem Schnittstellenbereich gegenüberliegenden Seite der Dichtmittelbehälter (8) zumindest im Wesentlichen flach ausgeführt ist.

9. Reifenreparaturset (1) nach einem der Ansprüche 4 bis 8,
wobei in einem Zustand, in welchem der der Dichtmittelbehälter (8) mit dem Abstützkörper (3) und/oder mit der Verdichtereinheit (5) verbunden ist, das Reifenreparaturset (1) zumindest im Wesentlichen einen rotationssymmetrischen, insbesondere pilzförmigen Aufbau aufweist, und wobei vorzugsweise der Dichtmittelbehälter (8) über ein einziges Befestigungsmittel (16), insbesondere in Gestalt einer Schraube, eines Schnellverschlusses und/oder einer Schnellsicherung, mit der Verdichtereinheit (5) und/oder dem Abstützkörper (3) verbunden ist, wobei das einzige Befestigungsmittel (16) insbesondere auf der Rotationsachse des Reifenreparatursets (1) liegt.

10. Reifenreparaturset (1) nach einem der Ansprüche 5 bis 9,
wobei der Dichtmittelbehälter (8) zwei vorzugsweise zumindest im Wesentlichen identisch aber spiegelverkehrt ausgebildete torussegmentförmige Bereiche (17) aufweist, die vorzugsweise miteinander in Fluidverbindung stehen, und die jeweils zwei einander zugewandte Stirnseiten aufweisen, wobei in einem Zustand, in welchem der der Dichtmittelbehälter (8) mit dem Abstützkörper (3) und/oder mit der Verdichtereinheit (5) verbunden ist, zwischen den einander zugewandten Stirnseiten der beiden torussegmentförmigen Bereiche (17) mindestens ein Druckluftanschluss (12) zum Zuführen von Druckluft zu dem Dichtmittelbehälter (8) und mindestens ein Dichtmittelauslass (13) angeordnet sind, wobei der mindestens eine Druckluftanschluss (12) und der mindestens eine Dichtmittelauslass (13) vorzugsweise gegenüberliegend angeordnet sind.

11. Verfahren zum Aufpumpen und/oder Abdichten eines auf einer Felge (2) eines Fahrzeugrads montierten Reifens, wobei das Verfahren folgende Verfahrensschritte aufweist:
- Bereitstellen eines Reifenreparatursets (1) nach einem der Ansprüche 1 bis 10;
- Einsetzen des Abstützkörpers (3) des Reifenreparatursets (1) in die Mittenausnehmung (4) der Fahrzeugfelge (2);
- strömungsmäßiges Verbinden eines Druckluftauslasses der Verdichtereinheit (5) mit dem Reifenventil des Reifens; und
- Aktivieren des Antriebs der Verdichtereinheit (5).

12. Verfahren nach Anspruch 11,
wobei zum Aktivieren des Antriebs der Verdichtereinheit (5) diesem über eine zumindest bereichsweise außerhalb der Fahrzeugfelge (2) und dem Fahrzeug verlaufende elektrische Leitung elektrische Energie vorzugsweise aus dem Bordnetz des Fahrzeugs zugeführt wird.

13. Verfahren nach Anspruch 11 oder 12,
wobei der Antrieb der Verdichtereinheit (5) manuell oder automatisch, vorzugsweise wahlweise automatisch deaktiviert wird, insbesondere wenn ein Ist-Druck in dem Reifen einen vorab festgelegten oder festlegbaren Soll-Druck erreicht oder erreicht hat, wobei nach dem Deaktivieren des Antriebs der Verdichtereinheit (5) das Reifenreparaturset (1) in seinem an der Fahrzeugfelge (2) montierten Zustand verbleibt oder verbleiben kann, auch wenn die Fahrt des Fahrzeugs wieder aufgenommen wird.

14. Verfahren nach einem der Ansprüche 11 bis 13,
wobei der Druckluftauslass der Verdichtereinheit (5) indirekt mit dem Reifenventil des aufzupumpenden und/oder abzudichtenden Reifens strömungsmäßig verbunden wird, und zwar unter Zwischenschaltung eines Dichtmittelbehälters (8) zum Ausbringen eines Dichtmittels.

## Claims

1. A tire repair kit (1) for inflating and/or sealing, as required, a tire mounted on a rim (2) of a vehicle wheel, wherein the tire repair kit (1) can be mounted, in particular temporarily, on the vehicle wheel and comprises:
- an in particular cup-shaped or pot-shaped supporting body (3) which, in particular as required, is exchangeably fastenable to the vehicle wheel rim (2) and in particular is exchangeably receivable in the central recess (4) of the vehicle wheel rim (2); and
- a compressor unit (5), which is connected to the in particular cup-shaped or pot-shaped supporting body (3) and has a drive and a compressor portion (7) with at least one working chamber, **characterized in that** the drive and the compressor portion (7) are arranged axially offset with respect to each other, and wherein the drive is facing an inside and the compressor portion (7) is facing an outside, and wherein the supporting body (3) has a flange region (10) via which the compressor portion (7) is releasably connected to the supporting body (3), wherein, in a state of the supporting body (3) in which it is inserted in the central recess (4) of the vehicle wheel rim (2), the compressor unit (5) is arranged at least in certain regions and preferably completely outside the central recess (4) of the vehicle wheel rim (2).

2. The tire repair kit (1) as claimed in claim 1,
wherein the supporting body (3) has a size and/or geometry adapted to the central recess (4) of the vehicle wheel rim (2), specifically in particular in such a manner that the supporting body (3) is at least partially and preferably completely receivable in the central recess (4) of the vehicle wheel rim (2), wherein the supporting body (3) is associated with in particular reversibly releasable connecting means (9), in particular in the form of snap-in connecting means, for releasably fixing the supporting body (3) on the vehicle wheel rim, wherein the in particular reversibly releasable connecting means (9) of the supporting body (3) are designed in particular to fix the tire repair kit (1) securely to the vehicle wheel rim (2) even when the vehicle is moving.

3. The tire repair kit (1) as claimed in claim 1 or 2,
wherein the drive of the compressor unit (5) is received at least partially or in certain regions in the supporting body (3), and wherein the drive of the compressor unit (5) is preferably an electric motor drive to which, as required and especially when the vehicle is stationary, the electrical energy necessary for operating the drive can be supplied, in particular via an electric line running at least in certain regions outside the vehicle.

4. The tire repair kit (1) as claimed in one of claims 1 to 3,
wherein the tire repair kit (1) has, in particular optionally, a sealant container (8) which preferably substantially has a toroidal and in particular rotationally toroidal shaping at least in certain regions, wherein the sealant container (8) is in particular releasably connected or connectable fluidically to the compressor portion (7), and in particular to the at least one working chamber of the compressor portion (7), in such a manner that compressed air can be supplied to the sealant container (8) at least as required in order to dispense a sealant, wherein the sealant container (8) preferably has a sealant outlet coupling (13), in particular in the form of a quick-action coupling, via which an outlet of the sealant container (8) is fluidically connectable as required to a valve of the tire.

5. The tire repair kit (1) as claimed in claim 4,
wherein the sealant container (8) is in particular releasably connected or connectable to the vehicle wheel rim (2) and/or to the supporting body (3) and/or to the compressor unit (5).

6. The tire repair kit (1) as claimed in claim 4 or 5,
wherein the compressor unit (5) has at least one compressed air coupling (11) which is fluidically connected to a pressure side of the compressor portion (7), in particular in the form of a quick-action coupling; and/or
wherein the sealant container (8) has at least one compressed air coupling (12), in particular in the form of a quick-action coupling,
and wherein compressed air can be applied to the sealant container (8) as required via the at least one compressed air coupling (11) of the compressor unit (5) and/or via the at least one compressed air coupling (12) of the sealant container (8).

7. The tire repair kit (1) as claimed in one of claims 4 to 6,
wherein the sealant container (8) is releasably and/or exchangeably connectable or connected to the compressor unit (5) and/or to the supporting body (3), wherein, for this purpose, at least one fastening means (16), in particular in the form of a screw, a quick-action closure and/or a quick-action securing means, is assigned to the sealant container (8).

8. The tire repair kit (1) as claimed in one of claims 4 to 7,
wherein the sealant container (8) has an interface region via which the sealant container (8) is releasably and/or exchangeably connectable or connected to the compressor unit (5) and/or to the supporting body (3), wherein the sealant container (8) is at least substantially flat on a side opposite the interface region.

9. The tire repair kit (1) as claimed in one of claims 4 to 8,
wherein, in a state in which the sealant container (8) is connected to the supporting body (3) and/or to the compressor unit (5), the tire repair kit (1) has at least substantially a rotationally symmetrical, in particular mushroom-shaped structure, and wherein preferably the sealant container (8) is connected to the compressor unit (5) and/or to the supporting body (3) via a single fastening means (16), in particular in the form of a screw, a quick-action closure and/or a quick-action securing means, wherein the single fastening means (16) is located in particular on the axis of rotation of the tire repair kit (1).

10. The tire repair kit (1) as claimed in one of claims 5 to 9,
wherein the sealant container (8) has two preferably at least substantially identical but mirror-inverted toroidal segment-shaped regions (17) which are preferably fluidically connected to one another and which each have two end faces facing one another, wherein, in a state in which the sealant container (8) is connected to the supporting body (3) and/or to the compressor unit (5), at least one compressed air connection (12) for supplying compressed air to the sealant container (8) and at least one sealant outlet (13) are arranged between the mutually facing end faces of the two toroidal segment-shaped regions (17), wherein the at least one compressed air connection (12) and the at least one sealant outlet (13) are preferably arranged opposite one another.

11. A method for inflating and/or sealing a tire mounted on a rim (2) of a vehicle wheel, wherein the method comprises the following method steps:
- providing a tire repair kit (1) as claimed in one of claims 1 to 10;
- inserting the supporting body (3) of the tire repair kit (1) into the central recess (4) of the vehicle wheel rim (2);
- fluidically connecting a compressed air outlet of the compressor unit (5) to the tire valve of the tire; and
- activating the drive of the compressor unit (5).

12. The method as claimed in claim 11,
wherein, in order to activate the drive of the compressor unit (5), electrical energy is preferably supplied from the vehicle electric system to said drive via an electric line running at least in certain regions outside the vehicle wheel rim (2) and the vehicle.

13. The method as claimed in claim 11 or 12,
wherein the drive of the compressor unit (5) is deactivated manually or automatically, preferably optionally automatically, in particular when an actual pressure in the tire reaches or has reached a previously defined or definable target pressure, wherein, after the drive of the compressor unit (5) is deactivated, the tire repair kit (1) remains or can remain in its mounted state on the vehicle wheel rim (2), even if the vehicle resumes moving.

14. The method as claimed in one of claims 11 to 13,
wherein the compressed air outlet of the compressor unit (5) is indirectly fluidically connected to the tire valve of the tire to be inflated and/or sealed, specifically with the interposition of a sealant container (8) for dispensing a sealant.

## Revendications

1. Kit de réparation de pneumatique (1) pour le gonflage et/ou le scellage, si nécessaire d'un pneumatique monté sur une jante (2) d'une roue de véhicule, dans lequel le kit de réparation de pneumatique (1) peut être monté en particulier temporairement au niveau de la roue de véhicule et présente ce qui suit:
- un corps d'appui (3) en particulier en forme de bol ou de pot qui peut être fixé de manière interchangeable, en particulier si nécessaire, à la jante de véhicule (2) et peut être reçu de manière interchangeable en particulier dans l'évidement central (4) de la jante de véhicule (2); et
- une unité de compresseur (5) reliée au corps d'appui (3) en particulier en forme de bol ou de pot avec un entraînement et une section de compresseur (7) avec au moins un espace de travail, **caractérisé en ce que** l'entraînement et la section de compresseur (7) sont agencés en déport axialement l'un par rapport à l'autre et dans lequel l'entraînement face à un côté intérieur et la section de compresseur (7) face à un côté extérieur, et dans lequel le corps d'appui (3) présente une zone de bride (10) par le biais de laquelle la section de compresseur (7) est reliée de manière amovible au corps d'appui (3), dans lequel dans un état inséré du corps d'appui (3) dans l'évidement central (4) de la jante de véhicule (2), l'unité de compresseur (5) est agencée au moins par endroits et de préférence complètement en dehors de l'évidement central (4) de la jante de véhicule (2).

2. Kit de réparation de pneumatique (1) selon la revendication 1,
dans lequel le corps d'appui (3) présente une taille et/ou géométrie adaptée à l'évidement central (4) de la jante de véhicule (2), et ce en particulier de telle manière que le corps d'appui (3) puisse être reçu au moins partiellement et de préférence complètement dans l'évidement central (4) de la jante de véhicule (2), dans lequel au corps d'appui (3) sont associés des moyens de liaison (9) amovibles en particulier de manière réversible, en particulier sous la forme de moyens de liaison d'encliquetage pour la fixation amovible du corps d'appui (3) à la jante de véhicule, dans lequel les moyens de liaison (9) amovibles en particulier de manière réversible du corps d'appui (3) sont réalisés en particulier afin de fixer le kit de réparation de pneumatique (1) de manière sûre à la jante de véhicule (2), aussi en cas de déplacement du véhicule.

3. Kit de réparation de pneumatique (1) selon la revendication 1 ou 2,
dans lequel l'entraînement de l'unité de compresseur (5) est reçu au moins partiellement ou par endroits dans le corps d'appui (3), et dans lequel l'entraînement de l'unité de compresseur (5) est de préférence un entraînement électromotorisé, auquel peut être fournie, si nécessaire et avant tout à l'arrêt du véhicule, l'énergie électrique nécessaire au fonctionnement de l'entraînement en particulier par le biais d'un câble électrique s'étendant au moins par endroits en dehors du véhicule.

4. Kit de réparation de pneumatique (1) selon l'une quelconque des revendications 1 à 3,
dans lequel le kit de réparation de pneumatique (1) présente en particulier en option un récipient d'agent d'étanchéité (8) qui présente de préférence au moins par endroits sensiblement une mise en forme en forme de tore et en particulier en forme de tore de rotation, dans lequel le récipient d'agent d'étanchéité (8) est ou peut être relié en particulier de manière amovible en communication fluidique à la section de compresseur (7) et en particulier à l'au moins un espace de travail de la section de compresseur (7) de telle manière que de l'air comprimé puisse être amené au récipient d'agent d'étanchéité (8) au moins si nécessaire pour répandre un agent d'étanchéité, dans lequel le récipient d'agent d'étanchéité (8) présente de préférence un couplage de sortie d'agent d'étanchéité (13), en particulier sous la forme d'un couplage rapide, par le biais duquel une sortie du récipient d'agent d'étanchéité (8) peut être reliée si nécessaire en communication fluidique à une valve du pneumatique.

5. Kit de réparation de pneumatique (1) selon la revendication 4,
dans lequel le récipient d'agent d'étanchéité (8) est ou peut être relié à la jante de véhicule (2) et/ou au corps d'appui (3) et/ou à l'unité de compresseur (5) en particulier de manière amovible.

6. Kit de réparation de pneumatique (1) selon la revendication 4 ou 5,
dans lequel l'unité de compresseur (5) présente au moins un couplage d'air comprimé (11) relié en communication fluidique à un côté de pression de la section de compresseur (7), en particulier sous la forme d'un couplage rapide; et/ou
dans lequel le récipient d'agent d'étanchéité (8) présente au moins un couplage d'air comprimé (12), en particulier sous la forme d'un couplage rapide,
et dans lequel le récipient d'agent d'étanchéité (8) peut être alimenté si nécessaire en air comprimé par le biais de l'au moins un couplage d'air comprimé (11) de l'unité de compresseur (5) et/ou par le biais de l'au moins un couplage d'air comprimé (12) du récipient d'agent d'étanchéité (8).

7. Kit de réparation de pneumatique (1) selon l'une quelconque des revendications 4 à 6,
dans lequel le récipient d'agent d'étanchéité (8) est ou peut être relié de manière amovible et/ou interchangeable à l'unité de compresseur (5) et/ou au corps d'appui (3), dans lequel, à cet effet, au moins un moyen de fixation (16), en particulier sous la forme d'une vis, d'une fermeture rapide et/ou d'une fixation rapide est associé au récipient d'agent d'étanchéité (8).

8. Kit de réparation de pneumatique (1) selon l'une quelconque des revendications 4 à 7,
dans lequel le récipient d'agent d'étanchéité (8) présente une zone d'interface, par le biais de laquelle le récipient d'agent d'étanchéité (8) est ou peut être relié de manière amovible et/ou interchangeable à l'unité de compresseur (5) et/ou au corps d'appui (3), dans lequel le récipient d'agent d'étanchéité (8) est réalisé au moins sensiblement plat sur un côté opposé à la zone d'interface.

9. Kit de réparation de pneumatique (1) selon l'une quelconque des revendications 4 à 8,
dans lequel, dans un état dans lequel le récipient d'agent d'étanchéité (8) est relié au corps d'appui (3) et/ou à l'unité de compresseur (5), le kit de réparation de pneumatique (1) présente au moins sensiblement une structure symétrique en rotation, en particulier en forme de champignon, et dans lequel le récipient d'agent d'étanchéité (8) est de préférence relié par le biais d'un unique moyen de fixation (16), en particulier sous la forme d'une vis, d'une fermeture rapide et/ou d'une fixation rapide, à l'unité de compresseur (5) et/ou au corps d'appui (3), dans lequel l'unique moyen de fixation (16) se trouve en particulier sur l'axe de rotation du kit de réparation de pneumatique (1).

10. Kit de réparation de pneumatique (1) selon l'une quelconque des revendications 5 à 9,
dans lequel le récipient d'agent d'étanchéité (8) présente deux zones (17) en forme de segment toroïdal réalisées de préférence au moins sensiblement de manière identique mais en image inversée, zones qui sont de préférence reliées fluidiquement entre elles, et qui présentent respectivement deux côtés avant tournés l'un vers l'autre, dans lequel, dans un état dans lequel le récipient d'agent d'étanchéité (8) est relié au corps d'appui (3) et/ou à l'unité de compresseur (5), au moins un raccord d'air comprimé (12) pour la fourniture d'air comprimé au récipient d'agent d'étanchéité (8) et au moins une sortie d'agent d'étanchéité (13) sont agencés entre les côtés avant tournés l'un vers l'autre des deux zones (17) en forme de segment toroïdal, dans lequel le au moins un raccord d'air comprimé (12) et la au moins une sortie d'agent d'étanchéité (13) sont agencés de préférence opposés l'un à l'autre.

11. Procédé de gonflage et/ou de scellage d'un pneumatique monté sur une jante (2) d'une roue de véhicule, dans lequel le procédé présente les étapes de procédé suivantes:
fourniture d'un kit de réparation de pneumatique (1) selon l'une quelconque des revendications 1 à 10 ;
- insertion du corps d'appui (3) du kit de réparation de pneumatique (1) dans l'évidement central (4) de la jante de véhicule (2);
- liaison en communication fluidique d'une sortie d'air comprimé de l'unité de compresseur (5) à la valve de pneu du pneu; et
- activation de l'entraînement de l'unité de compresseur (5).

12. Procédé selon la revendication 11,
dans lequel, afin d'activer l'entraînement de l'unité de compresseur (5), de l'énergie électrique lui est fournie de préférence à partir du réseau de bord du véhicule par le biais d'un câble électrique s'étendant au moins par endroits en dehors de la jante de véhicule (2) et du véhicule.

13. Procédé selon la revendication 11 ou 12,
dans lequel l'entraînement de l'unité de compresseur (5) est désactivé manuellement ou automatiquement, de préférence au choix automatiquement, en particulier lorsqu'une pression réelle dans le pneumatique atteint ou a atteint une pression de consigne fixée ou pouvant être fixée au préalable, dans lequel, après la désactivation de l'entraînement de l'unité de compresseur (5), le kit de réparation de pneumatique (1) reste ou peut rester dans son état monté sur la jante de véhicule (2) même si le véhicule se déplace de nouveau.

14. Procédé selon l'une quelconque des revendications 11 à 13,
dans lequel la sortie d'air comprimé de l'unité de compresseur (5) est reliée en communication fluidique indirectement à la valve de pneu du pneu à gonfler et/ou à sceller, et ce en intercalant un récipient d'agent d'étanchéité (8) pour répandre un agent d'étanchéité.
